# EUROPEAN PATENT SPECIFICATION

(11) **EP 2 962 546 B1**
(45) Date of publication and mention of the grant of the patent: **03.05.2017**
(21) Application number: 14425157.6
(22) Date of filing: 22.12.2014
(51) Int. Cl.: A01F 29/00

(54) **Agricultural machine for shredding hay, forage and similar products**
Landwirtschaftliche Maschine zum Zerkleinern von Heu, Futter und ähnlichen Produkten
Machine agricole pour déchiqueter du foin, du fourrage et produits similaires

(30) Priority: 02.07.2014 IT VI20140171
(43) Date of publication of application: 06.01.2016
(73) Proprietor: Officine Meccaniche Forasacco S.R.L., 35016 Piazzola sul Brenta (PD) (IT)
(72) Inventor: Forasacco, Antonio, 35016 Piazzola sul Brenta (PD) (IT); Forasacco, Pierluigi, 35016 Piazzola sul Brenta (PD) (IT)
(74) Representative: Santi, Filippo

(56) References cited:
- EP-A1- 2 436 261
- CH-A- 480 778
- GB-A- 2 496 941
- US-A- 5 505 391
- US-B1- 6 966 512

## Description

The present invention relates to an agricultural machine for shredding products such as hay, forage and similar products.

More particularly, the invention concerns an agricultural machine for exfoliating and chopping bales in the form of which bedding products, such as hay, straw, maize stalks, etc., are typically collected and compressed. The loose agricultural products generally have a low density that is increased by compressing said products in bales, with the advantage of a smaller encumbrance and an easier transportability. Moreover in some cases the compression of the product can facilitate their storage, thus reducing the oxygen permeability.

The bales of hay, which have a cylindrical or parallelepiped shape, are currently very known but they need a first shredding or flaking step in order to give them to the animals.

It is known to use devices and machines, which are able, in particular, to flake bales of fodder and bedding products. Said shredding machines are typically used for towing and driven by the motive power of a tractor and are able to harvest and, in general, directly distribute the products in the animals' feeders or beddings.

Shredding machines in which the load of the material occurs through a hopper and which therefore require a lifting system are also known. Said machines have obvious problems related to the load, especially for feeding bales particularly heavy or bulky.

Shredding machines which include a handling system with a chain conveyor for the loading of the material to be treated are also known. Currently, said conveyors have two side chains which transmit the movement, through a plurality of scrapers, to the bale and which send the bale to a cutting section.

Finally, shredding machines in which the cutting section is formed by a plane rotating disk, which is equipped with a toothed face and which has an horizontal axis of rotation are also known. A plurality of blades are mounted on a face of the disk which is opposite to the toothed face, said blades being provided in a direction perpendicular and radial to the disk. In practice, the product to be cut is put forward against the toothed face of the disk, which, by rotating, shreds the product, while the shredded product falls into a container which communicates with a spout, and, through the movement of the blades, is rotated and delivered thanks to the acquired tangential velocity. In a known version of said shredding machine, the blades can be replaced by a plurality of moving knives positioned on the circumference of the disk, in order to allow the cutting of the product with lower power consumption. In this case, however, the throwing distance of the shredded product decreases with respect to the distance obtained by using the blades.

However, the machines currently known have several drawbacks and can be improved under different aspects.

In particular, when the bales are particularly heavy or bulky, the 2-chains horizontal system does not completely solve the problems of the hopper feeding because the load has a deformation and the feeding motion is difficult.

Furthermore, the known machines have a poor efficacy in shredding the material. Their performance are not optimal related both to the operating conditions and to the safety of the operators.

Furthermore, the known devices have a complex structure and/or a high cost of implementation.

In particular, an agricultural machine for shredding products such as hay, forage and similar products having the features of the preamble of the appended claim 1 is known for example from EP2436261A1.

The aim of the present invention is to overcome the above mentioned drawbacks.

An object of the present invention is in fact to provide a shredding machine which is configured to exfoliate and chop pressed bales of hay, thus obtaining a loose and shredded material, which is suitable, inter alia, for feeding animals or for preparing the animals bedding.

A further object of the present invention is, in particular, to provide an agricultural machine which allows to shred bedding or fodder products and which is reliable and easy to use for operators.

The above mentioned objects are achieved by the present invention with an agricultural machine for shredding hay, forage and similar products according to the enclosed claim 1.

More detailed features of the device according to the invention are described in the dependent claims.

The invention will be described below for illustrative but not limitative purposes, with particular reference to a preferred embodiment and to the alleged figures, in which:
- figure 1 shows an overall perspective view of the machine;
- figure 2 shows a view of a technical detail of the machine of figure 1, in which the feeding system is pointed out;

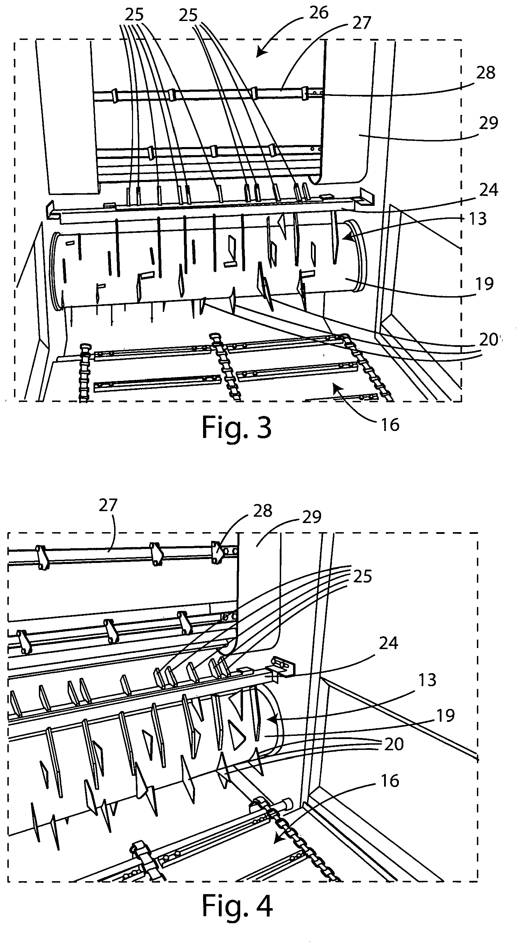

- figure 3 shows a section view of the shredding unit of the machine;
- figure 4 shows a detail of the machine of figure 1, in which the cutting devices and the related attachment system are pointed out;
- figure 5 shows a detailed front view of the cutting devices;
- figure 6 shows a detailed perspective view of the cutting devices;

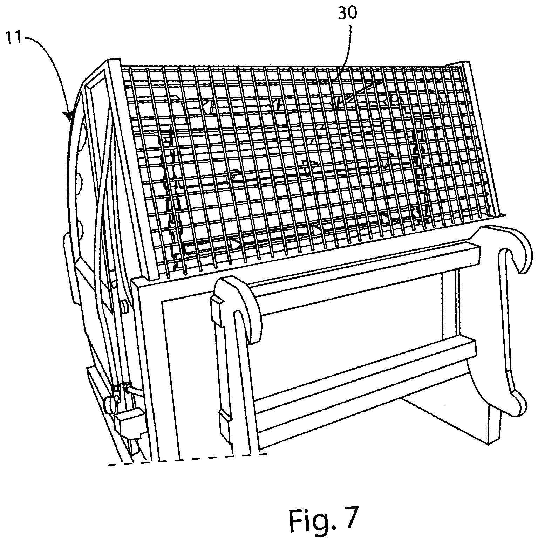

- figure 7 shows a rear view of the shredding machine of figure 1. According to the present invention, it is firstly to be understood that the products which can be shredded may include, in addition to straw, hay or corn stalks, as well as types of fodder, brushwood, pruning rests etc.

With reference to the mentioned figures, the shredding machine of the present invention comprises a frame, with an axle with or without wheels, on which is mounted a mixing tank 11, a feeding mouth 12, integral with the frame for loading the products to be chopped in the machine, a chopping or shredding device 13 mounted on the frame and a discharge mouth associated to the frame for delivering the products.

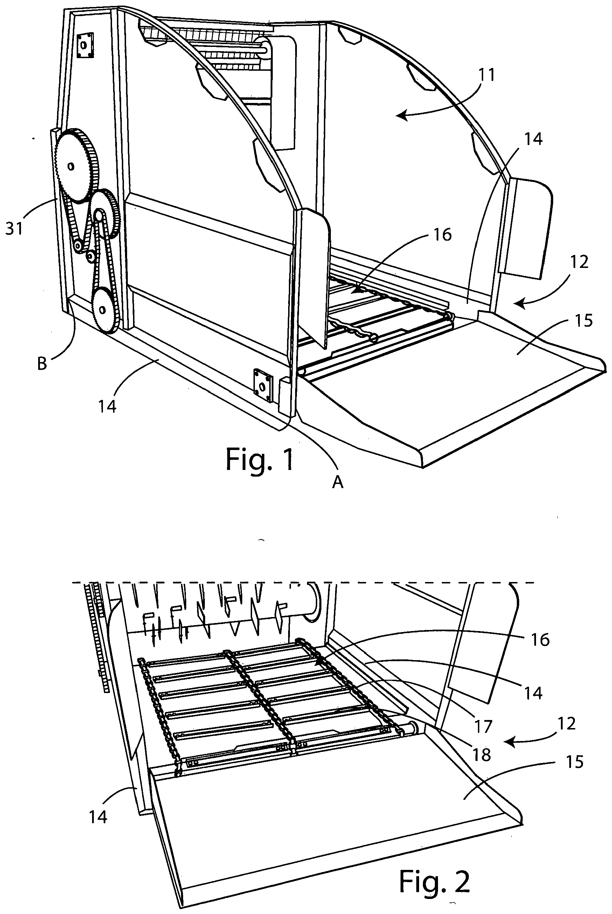

In particular, the machine frame comprises two grounded side bars 14, which are arranged laterally and below the frame and which are inclined towards the ground in correspondence of the feeding mouth 12, so as to facilitate the loading operations when the frame is not equipped with wheels; in particular, each side bar 14 typically has a height of 45 mm at one end located in correspondence of the feeding mouth 12 (point indicated by reference A in the enclosed figure 1) and 100 mm at the opposite end (point indicated by reference B in the enclosed figure 1). According to the preferred embodiment of the invention and with reference to the enclosed figures, the machine comprises in particular:
- an inclined loading platform 15, with a lower surface which is adjacent to the ground for making easier the insertion of the material through the feeding mouth 12, and
- an horizontal feeding conveyor belt 16, consisting of a 3-chains moving system 17 with transverse profiles 18 connecting said chains.

Said system allows to obtain an easier handling of the load even in case of a bulky or heavy load.

Furthermore, a shredding device 13 is formed by a rotating drum 19 with a horizontal axis, on the surface of which cutting devices 20 are fixed and are coupled and at least in part adjacent to respective abutments 32 fixed to said rotating drum 19.

Said cutting devices 20 are fixed, according to an alternating profile and according to a "boomerang" displacement, along the peripheral portion of the rotating drum 19, in a radial direction with respect to the axis of rotation, and they have a substantially flat and hooked shape.

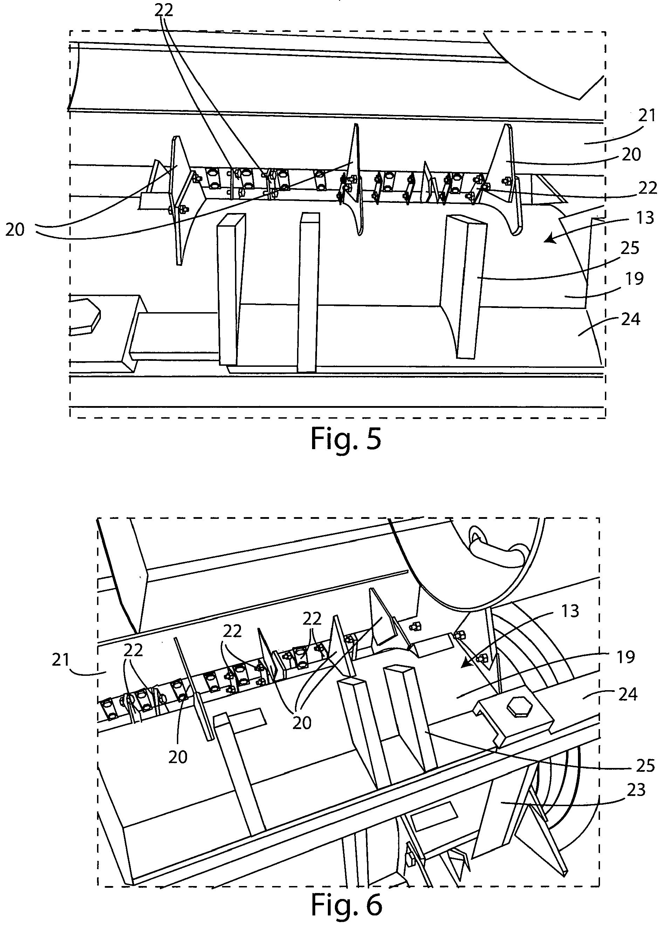

A plurality of triangular counter-blades 22 are also fixed to a fixed horizontal axle 21, which is parallel to the axis of rotation of the drum (fig. 5); said counter-blades 22 are adjustable in amplitude so as to vary the mutual distance.

Moreover, a further fixed horizontal axle 24, which is parallel to the axis of rotation of the drum 19 and which is positioned on the opposite side with respect to said axle 21, has first elements 23 which allow, during the rotation of the drum 19, to detach from the surface of the rotating surface the chopped material, in order to convey it to the top; additional second elements 25, which are fixed in the opposite direction, with respect to the axle 21, to the first elements 23, allow to avoid the material from depositing on the rotary drum 19.

A chains vertical conveyor belt 26 is arranged so that the transverse connection bars 27, which are provided with blades 28, are able to efficiently hold and drag the shredded material.

The chains of the conveyor belt 26 are set in rotation in a direction as to drag the material upwards and are laterally protected by means of chain-cover elements 29 fixed to the frame; said chain-cover elements 29 prevent the shredded material to come into contact with the chains and to hinder the movement.

Furthermore, a protective grille 30 is mounted on the frame and is vertically arranged, so as to be adjacent to the vertical conveyor belt 26 and to allow an operator for checking the handling system and the shredding operation.

A toothed wheels system 31 for moving the horizontal feeding conveyor belt 16 and the vertical conveyor belt 26 is also provided. In particular, two different speeds of rotation can be provided in order to facilitate the movement of the load.

Typically, the shredding machine is a trailer, but it can also be self-propelled and may comprise a drawbar for coupling it to an agricultural vehicle, such as a tractor, and one or more axes with passive wheels for the trailer. The machine is also typically driven by the driving force of the agricultural vehicle, but it can also be independently operated.

The operation of the machine initially involves the loading of a certain amount of bedding products, such as straw or hay or other materials (free or packed fodder, packed in bales, roto-bales or prismatic bales), through the feeding mouth 12.

The horizontal feeding conveyor belt 16 pushes the product against the chopping device 13, that provides for its shredding thanks to the blades 20 placed on the rotating surface 19 and thanks to the fixed counter-blades 22.

The shredded material thus rotates driven by the movement of the drum 19 until it contacts the fixed elements 23 which raise the material and guide it towards the vertical conveyor belt 26.

The product thus ends to the chain vertical conveyor belt 26 which, placed in rotation, drags the material upward, also due to the presence of the blades 28 on the transverse connection bars 27.

Once reached the top of the machine the shredded material is delivered outside due to the centrifugal force given by the rotation.

The present invention has been described for illustrative but not limitative purposes, according to a preferred embodiment, but it is to be understood that variations and/or modifications can be made by men skilled in the art without departing from the relevant scope of protection as defined by the appended claims.

## Claims

1. Agricultural machine for shredding hay, forage and similar products, comprising a frame, on which are mounted a mixing tank (11), a feeding mouth (12), a shredding device (13) and a supply opening wherein said shredding device (13) comprises a rotating drum (19), having an horizontal rotation axis, on which surface are fixed some cutting devices (20), which are at least partially associated with and adjacent to at least one abutment (32) fixed to said rotating drum (19), **characterized in that** said machine has a vertical conveyor belt (26) with chains comprising transversal connection bars (27) equipped with blades (28), moving side chains and chain-cover elements (29) fixed to said frame.

2. Machine according to claim 1, wherein said machine includes a fixed axle (21), which is parallel to the rotation axis of the drum (19) and on which are fixed some counter-blades (22).

3. Machine according to some of the preceding claims, wherein said cutting devices (20) are fixed, with an alternate profile, along the superficial part of the rotating drum (19), according to a radial direction with respect to its rotation axis.

4. Machine according to at least one of the previous claims, wherein said machine also comprises an horizontal feeding conveyor belt (16), consisting of a moving system with three chains (17) and transversal connection bars (18) between said chains.

5. Machine according to at least one of the previous claims, wherein said feeding mouth (12) also comprises an inclined loading platform (15) of which lower surface is adjacent to the ground.

6. Machine according to at least one of the previous claims, wherein said machine also has a fixed horizontal axle (24), parallel to the rotation axis of said drum (19) and equipped with first elements (23) aimed to carry upwards the shredded material, and second elements (25), fixed to said axle (24) on the opposite side of said first elements (23), which prevent the material from depositing on said drum (19).

7. Machine according to at least one of the previous claims, wherein said machine has a motorization system connected to a toothed wheels system (31) aimed to move said horizontal feeding conveyor belt (16) and said vertical conveyor belt, said conveyor belts having different speeds.

8. Machine according to at least one of the previous claims, wherein said machine has a protective grille (30) mounted on said frame and positioned vertically and adjacent to the vertical conveyor belt (26).

9. Machine according to at least one of the previous claims, wherein said frame comprises two grounded side bars (14), which are placed laterally and below said frame and which are inclined towards the ground in correspondence of said feeding mouth (12).

## Patentansprüche

1. Landwirtschaftliche Maschine zum Zerkleinern von Heu, Futter und ähnlichen Produkten, umfassend einen Rahmen, auf dem ein Mischtank (11) befestigt ist, eine Zuführöffnung (12), ein Zerkleinerungsgerät (13) und eine Zuführöffnung, wobei das Zerkleinerungsgerät (13) eine Rotationstrommel (19) mit einer horizontalen Roatationsachse aufweist, auf deren Oberfläche einige Schneidgeräte (20) befestigt sind, die mindestens teilweise zugeordnet und angrenzend sind an mindestens ein Widerlager (32), das an der Rotationstrommel (19) befestigt ist, **dadurch gekennzeichnet, dass** die Maschine ein vertikales Förderband (26) mit Ketten aufweist, die Querverbindungsstäbe (27) aufweisen, die mit Schneiden (28) ausgerüstet sind, wobei sich die Ketten bewegen und die Kettenabdeckungselemente (29) an dem Rahmen befestigt sind.

2. Maschine gemäß Anspruch 1, wobei die Maschine eine feste Achse (21) enthält, die parallel zu der Drehachse der Trommel (19) ist und auf der einige Gegenschneiden (22) befestigt sind.

3. Maschine gemäß einigen der vorstehenden Ansprüche, wobei die Schneidgeräte (20) mit einem alternierenden Profil entlang einem Oberflächenteil der Rotationstrommel (19) befestigt sind entsprechend einer Radialrichtung in Bezug auf deren Drehachse.

4. Maschine gemäß mindestens einem der vorangehenden Ansprüche, wobei die Maschine auch ein horizontales Zuführförderband (16) aufweist, das aus einem Bewegungssystem mit drei Ketten (17) und Querverbindungsstäben (18) zwischen den Ketten besteht.

5. Maschine gemäß mindestens einem der vorangehenden Ansprüche, wobei die Zuführöffnung (12) auch eine geneigte Beladungsplattform (15) aufweist, deren untere Oberfläche an den Boden angrenzt.

6. Maschine gemäß mindestens einem der vorangehenden Ansprüche, wobei die Maschine auch eine feste Horizontalachse (24) aufweist, die parallel zu der Drehachse der Trommel (12) ist und die ausgerüstet ist mit ersten Elementen (23), die darauf abzielen, das zerkleinerte Material aufwärts zu führen, und zweiten Elementen (25), die an der Achse (24) auf der gegenüberliegenden Seite der ersten Elemente (23) befestigt sind, die das Material daran hindern, sich von der Trommel (19) niederzuschlagen.

7. Maschine gemäß mindestens einem der vorangehenden Ansprüche, wobei die Maschine ein Motorsystem aufweist, das mit einem Zahnwellensystem (31) verbunden ist, das darauf abzielt, das horizontale Zuführförderband (16) und das vertikale Förderband zu bewegen, wobei die Förderbänder verschiedene Geschwindigkeiten haben.

8. Maschine gemäß mindestens einem der vorangehenden Ansprüche, wobei die Maschine ein Schutzgitter (30) aufweist, das an dem Rahmen befestigt und positioniert ist in vertikaler Richtung und angrenzend an das vertikale Förderband (26).

9. Maschine gemäß mindestens einem der vorangehenden Ansprüche, wobei der Rahmen zwei bodenseitige Seitenstangen (14) aufweist, die seitlich und unter dem Rahmen angeordnet sind und die entsprechend der Zuführöffnung (12) in Richtung des Bodens geneigt sind.

## Revendications

1. Machine agricole pour déchiqueter du foin, du fourrage et des produits similaires, comprenant un cadre, sur lequel sont montés un réservoir de mélange (11), une bouche d'alimentation (12), un dispositif de déchiquetage (13) et une ouverture de fourniture dans laquelle ledit dispositif de déchiquetage (13) comprend un tambour rotatif (19), ayant un axe de rotation horizontal, sur la surface duquel sont fixés certains dispositifs de coupe (20), qui sont au moins partiellement associés et adjacents à au moins un pilier (32) fixé audit tambour rotatif (19), **caractérisée en ce que** ladite machine a une bande transporteuse verticale (26) avec des chaînes comprenant des barres de connexion transversales (27) équipées avec des lames (28), des chaînes latérales mobiles et des éléments de couverture de chaîne (29) fixés audit cadre.

2. Machine selon la revendication 1, dans laquelle ladite machine inclut un essieu fixé (21), qui est parallèle à l'axe de rotation du tambour (19) et sur lequel sont fixées certaines contre-lames (22).

3. Machine selon certaines des revendications précédentes, dans laquelle lesdits dispositifs de coupe (20) sont fixés, avec un profile alternatif, le long de la partie superficielle du tambour rotatif (19), selon une direction radiale par rapport à son axe de rotation.

4. Machine selon au moins une des revendications précédentes, dans laquelle ladite machine comprend aussi une bande transporteuse d'alimentation horizontale (16), consistant en un système de déplacement avec trois chaînes (17) et des barres de connexion transversales (18) entre lesdites chaînes.

5. Machine selon au moins une des revendications précédentes, dans laquelle ladite bouche d'alimentation (12) comprend aussi une plateforme de chargement inclinée (15) dont la surface inférieure est adjacente au sol.

6. Machine selon au moins une des revendications précédentes, dans laquelle ladite machine a aussi un essieu horizontal fixé (24), parallèle à l'axe de rotation dudit tambour (19) et équipé avec des premiers éléments (23) visant à transporter vers le haut le matériau déchiqueté, et des deuxièmes éléments (25), fixés audit essieu (24) sur le côté opposé desdits premiers éléments (23), qui empêchent le matériau de se déposer sur ledit tambour (19).

7. Machine selon au moins une des revendications précédentes, dans laquelle ladite machine a un système de motorisation connecté à un système de roues dentées (31) visant à déplacer ladite bande transporteuse d'alimentation horizontale (16) et ladite bande transporteuse verticale, lesdites bandes transporteuses ayant des vitesses différentes.

8. Machine selon au moins une des revendications précédentes, dans laquelle ladite machine a une grille de protection (30) montée sur ledit cadre et positionnée verticalement et adjacente à la bande transporteuse verticale (26).

9. Machine selon au moins une des revendications précédentes, dans laquelle ledit cadre comprend deux barres latérales au sol (14), qui sont placées latéralement et sous ledit cadre et qui sont inclinées en direction du sol en correspondance avec ladite bouche d'alimentation (12).
